(19) Europäisches Patentamt
European Patent Office
Office européen des brevets

(11) Numéro de publication: **0 054 461**
**B1**

# (12) FASCICULE DE BREVET EUROPEEN

(45) Date de publication du fascicule du brevet: **04.04.84**

(51) Int. Cl.³: **C 01 G 15/00**, C 22 B 58/00, C 22 B 3/00

(21) Numéro de dépôt: **81401894.1**

(22) Date de dépôt: **30.11.81**

(54) **Procédé de purification de solutions de gallium.**

(30) Priorité: **05.12.80 FR 8025832**

(43) Date de publication de la demande: **23.06.82 Bulletin 82/25**

(45) Mention de la délivrance du brevet: **04.04.84 Bulletin 84/14**

(84) Etats contractants désignés: **AT BE CH DE FR GB IT LI LU NL SE**

(56) Documents cités:
**FR - A - 1 297 623**
**FR - A - 2 438 096**
**US - A - 3 151 931**

**CHEMICAL ABSTRACTS, volume 84, no. 10, 8 mars 1976, page 234, abrégé 63054a COLUMBUS OHIO (US)**
**CHEMICAL ABSTRACTS, volume 81, no. 8, 26 août 1974, page 296, abrégé 41823m COLUMBUS OHIO (US)**

(73) Titulaire: **RHONE-POULENC SPECIALITES CHIMIQUES, "Les Miroirs" 18, Avenue d'Alsace, F-92400 Courbevoie (FR)**

(72) Inventeur: **Leveque, Alain, 8-10, rue Manin, F-75019 Paris (FR)**
Inventeur: **Triollier, Michel, 22, Rue du Général Guillomat, F-17000 La Rochelle (FR)**

(74) Mandataire: **Dutruc-Rosset, Marie-Claude et al, RHONE POULENC RECHERCHES Service Brevets Chimie et Polymères 25, Quai Paul Doumer, F-92408 Courbevoie Cedex (FR)**

EP 0 054 461 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Procédé de purification de solutions de gallium

La présente invention concerne un procédé de purification de solutions de gallium en vue d'obtenir des solutions de chlorure de gallium de haute pureté.

Elle a trait plus particulièrement à un procédé de purification de solutions aqueuses acides de gallium permettant d'obtenir des solutions de gallium de pureté supérieure à 99,99%.

Les diverses applications du gallium dans le domaine de l'électronique nécessitent d'obtenir celui-ci à des degrés de pureté très grands. Il s'avère ainsi nécessaire de disposer de procédés qui permettent d'obtenir, à partir des solutions de gallium qui ne répondent pas aux spécifications de pureté désirées, des solutions de gallium de pureté supérieure à 99,99%; solutions à partir desquelles on pourra obtenir très aisément l'oxyde de gallium ou le gallium métallique aux degrés de pureté nécessaires à leurs diverses applications.

Divers procédés ont été proposés pour séparer le gallium des autres impuretés, les plus efficaces jusqu'à ce jour mettent en œuvre les résines échangeuses d'ions.

Toutefois, la séparation du gallium de certains ions métalliques comme ceux de calcium, magnésium, aluminium, cobalt, vanadium, cuivre, manganèse, sodium, zinc et en particulier du fer à l'état ferrique s'avère insuffisante par fixation, sélective du gallium de la solution à purifier sur résine échangeuse d'anion (Chemical Abstracts Vol 55 [1961] 21974 IV). Pour résoudre le problème de la purification en fer à l'état ferrique il a été proposé (Chemical Abstracts Vol 55 [1961] 21974 V et Vol 74 [1971] 108688 k) de réduire préalablement celui-ci en fer ferreux avant le passage sur résine. Mais, un tel procédé présente toutefois l'inconvénient essentiel de ne pas permettre une purification suffisante de la solution de gallium.

La demanderesse a mis au point un procédé de purification de solutions impures de gallium qui permet d'obtenir une excellente purification dans les divers éléments et en particulier en fer. Ce procédé comporte essentiellement la combinaison d'une étape de fixation du gallium en solution sur une résine échangeuse d'ion, qui réalise une première purification, puis une concentration du gallium dans la solution d'élution de la résine et d'une étape de purification de la solution obtenue par extraction liquide-liquide à l'aide d'un solvant qui extrait sélectivement le gallium.

La présente invention concerne en effet un procédé de purification d'une solution aqueuse acide de gallium en vue d'obtenir une solution de chlorure de gallium de très haute pureté caractérisé en ce que:

a) On ajuste, la concentration en ions chlorure de la solution aqueuse acide de gallium à une valeur comprise entre 3,5 et 8 M.

b) Puis on met en contact la solution de gallium avec une résine échangeuse d'ions du type base forte qui fixe le gallium; après lavage de la résine avec une solution d'acide chlorhydrique de concentration supérieure ou égale à 5 M, on élue le gallium de la résine avec de l'eau pour obtenir une solution aqueuse concentrée de chlorure de gallium.

c) On ajuste la concentration en ions chlorure de la solution obtenue à une valeur comprise entre 4 et 6 M.

d) On met en contact la solution aqueuse concentrée de chlorure de gallium avec une phase organique contenant un agent d'extraction du gallium insoluble dans l'eau, choisi parmi les alcools de formule générale ROH dans laquelle R est un radical hydrocarboné aliphatique et/ou cycloaliphatique ayant de préférence un nombre d'atomes de carbone compris entre 4 et 10, ou parmi les sels d'ammonium quaternaires de formule

$$[R_3N-CH_3]^+, Cl^-$$

dans laquelle le radical hydrocarboné R a de 8 à 10 atomes de carbone, de façon à ce que le gallium soit extrait dans la phase organique; on sépare la phase organique de la phase aqueuse.

e) On réalise un lavage sélectif de cette phase organique qui élimine les impuretés restantes.

f) Puis on opère le transfert du gallium purifié de la phase organique dans une solution aqueuse et enfin on sépare la phase organique de la phase aqueuse contenant le chlorure de gallium pur.

Les solutions aqueuses acides de gallium que l'on peut purifier selon le procédé de l'invention, en vue d'obtenir des solutions de très grande pureté, peuvent être d'origine très diverses. Elles sont de préférence des solutions d'au moins un des acides pris dans le groupe constitué par les acides chlorhydrique, sulfurique, perchlorique.

Les impuretés contenues dans ces solutions peuvent être très variées en nature et en quantité, celles-ci peuvent être constituées par les divers ions métalliques de la classification périodique des éléments et notamment ceux de calcium, magnésium, aluminium, vanadium, chrome, cuivre, manganèse, sodium, zinc, cobalt, nickel, plomb, cadmium, indium, barium, strontium, potassium, titane, lanthanides, yttrium, arsenic, fer (à l'état ferrique en particulier), phosphore, étain, bore, etc. Par ailleurs, la concentration du gallium dans ces solutions peut varier dans de très larges limites; toutefois le procédé selon la présente invention est particulièrement avantageux pour purifier des solutions

diluées en gallium dont la concentration est, par exemple, inférieure à 10 g/l environ.

Le procédé selon la présente invention est particulièrement adapté à la purification des solutions aqueuses issues du procédé de récupération du gallium des solutions d'aluminate de sodium du procédé Bayer tel que décrit notamment dans les brevets français n° 2 277 897, 2 307 047 et 2 307 882, les demandes de brevets français n° 76 29009 et 77 21607 et la demande de brevet européen 0 002 970 au nom de la demanderesse.

Selon le procédé de l'invention, on ajuste, si cela s'avère nécessaire, la concentration en ions chlorure de la solution de gallium à une valeur comprise entre 3,5 et 8 M et de préférence entre 4,5 et 6 M.

On ajuste cette concentration de préférence par ajout d'acide chlorhydrique à la solution de gallium. On peut également opérer par ajout de n'importe quel chlorure qui ne sera pas fixé par la résine dans l'étape ultérieure; comme chlorures pouvant convenir, on peut notamment citer les chlorures des métaux alcalins ou alcaline-terreux.

Après avoir ajusté, éventuellement, la concentration en ions chlorure on met en contact la solution de gallium avec une résine échangeuse d'ion du type base forte de caractère gel ou macroré-ticulé, qui fixe très sélectivement le gallium, croît-on, essentiellement sous forme de complexe anionique $GaCl_4$. Les résines que l'on peut mettre en œuvre sont notamment celles comportant les motifs de formules:

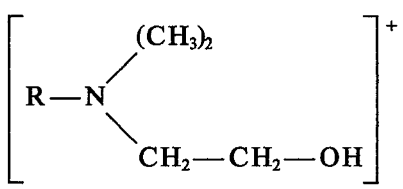

ou

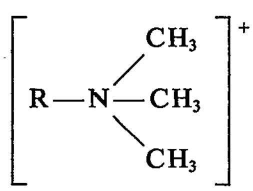

dans lesquelles R représente, par exemple, un copolymère styrène-divinylbenzène ou acrylique-divinylbenzène. On utilise, par exemple, les produits commercialisés sous les marques: Dowex 1, Duolite A 101 D, Duolite A 42, Lewatit M 500, Amberlite IRA 400, Amberlite IRA 410, Amberlite IRA 900, Amberlite IRA 910, Permutit ESB (A).

Leur capacité de fixation est généralement comprise entre environ 80 et 120 g de gallium par litre de résine. Lorsque l'opération de fixation est réalisée, on lave la résine chargée de gallium avec une solution d'acide chlorhydrique dont la concentration est de préférence supérieure ou égale à 5 M afin d'éliminer les impuretés retenues avec le gallium sur la résine.

On opère ensuite la récupération du gallium par élution de la résine avec de l'eau. On obtient ainsi une solution concentrée et purifiée de chlorure de gallium dont la concentration est généralement d'environ 40 à 60 g/l de gallium et dont l'acidité libre est d'environ 1 à 2 M.

Outre la purification très importante, on a réalisé une concentration notable en gallium de la solution impure initiale. Cette concentration est particulièrement favorable à la deuxième étape de purification par extraction par solvant tant du point de vue de son efficacité qu'en ce qui concerne la réduction de la taille des installations qu'elle permet.

L'étape de concentration — purification sur résine peut être mise en œuvre dans les dispositifs classiques et en particulier en plaçant la résine dans des colonnes disposées en série.

On ajuste la concentration en ions chlorure de la solution obtenue à une valeur comprise entre 4 et 6 M de la même façon que décrit précédemment de préférence par ajout d'acide chlorhydrique à ladite solution.

Selon le procédé de l'invention on met ensuite en contact la solution aqueuse concentrée de gallium avec une phase organique contenant un agent d'extraction du gallium substantiellement insoluble dans l'eau, et éventuellement un diluant inerte, de façon à ce que le gallium soit extrait sélectivement dans la phase organique.

L'agent d'extraction peut notamment être choisi parmi le groupe comportant:

- les alcools de formule générale ROH dans laquelle R est un radical hydrocarboné aliphatique et/ou cycloaliphatique ayant de préférence un nombre d'atomes de carbone compris entre environ 4 et 10. Parmi ceux-ci, on peut utiliser par exemple le pentanol, le n-butanol, l'isobutanol, le cyclohexanol, le n-hexanol 1, le 2-ethylhexanol, le n-heptanol, le n-octanol, l'isooctanol, le n-décanol, l'isodécanol; on choisira de préférence le 2-éthylhexanol pur,
- les sels d'ammonium quaternaires de formule

  $[R_3N-CH_3]^+Cl^-$

  dans laquelle le radical hydrocarboné R a de 8 à 10 atomes de carbone. Ces produits sont notamment commercialisés sous les marques Adogen 464 et Aliquat 336.

La proportion en agent d'extraction dans la phase organique n'est pas critique et peut varier dans le larges limites. Toutefois, il est en général avantageux que celle-ci soit la plus élevée possible. Ainsi dans le cas des sels d'ammonium quaternaire, une proportion comprise entre environ 3% et environ 30% en volume rapportée à la phase organique conduit à des conditions hydrodynamiques de purification avantageuses.

Dans le cas des alcools, leur proportion varie généralement de 10 à 100% en volume rapportée à la phase organique; les moins visqueux peuvent être utilisés purs, c'est-à-dire non dilués dans la phase organique, ce qui est particulièrement avantageux car cela conduit à des capacités d'extraction très importantes.

La phase organique peut notamment contenir en outre ainsi qu'il est bien connu de l'homme de l'art, un diluant. Parmi les diluants habituellement mis en œuvre dans le domaine de l'extraction liquide-liquide, on peut citer les composés aliphatiques, comme par exemple, l'heptane, le dodécane, l'hexane, et les coupes pétrolières du type kérosène; les composés aromatiques comme par exemple, le benzène, le toluène, l'éthylbenzène, le xylène et les coupes du type Solvesso (marque déposée par la Société Exxon) et enfin les dérivés halogénés de ces composés comme, par exemple, le chloroforme ou le tétrachlorure de carbone.

On sépare la phase aqueuse de la phase organique qui contient le gallium puis on réalise une opération de lavage sélectif de cette phase organique qui élimine les impuretés restantes qui ont été extraites en faible quantité avec le gallium.

Selon l'agent d'extraction mis en œuvre, cette opération de lavage sélectif de la phase organique est réalisée de préférence de la façon suivante:

— lorsque l'agent d'extraction est un alcool, on met en contact la phase organique avec de l'eau ou une solution d'acide chlorhydrique dont la concentration est avantageusement inférieure à 6 M. Les impuretés sont ainsi transférées dans la solution de lavage tandis que la phase organique retient le gallium purifié.
— Lorsque l'agent d'extraction est un chlorure d'ammonium quaternaire, on met en contact la phase organique avec une solution aqueuse chlorhydrique de lavage présentant une acidité comprise entre 5 et 8 M et contenant entre 1 et 50 g/l de gallium et de préférence entre 3 et 10 g/l.

On peut par exemple utiliser comme solution de lavage un mélange constitué d'une part, d'une solution d'acide chlorhydrique de concentration avantageusement comprise entre 7 et 12 M et, d'autre part, d'une fraction de la solution aqueuse finale purifiée de chlorure de gallium.

La solution aqueuse de lavage obtenue qui contient les impuretés et un peu de gallium peut éventuellement être recyclée avec la solution aqueuse acide initiale de gallium pour subir de nouveau les opérations de purification.

On opère ensuite le transfert du gallium purifié de la phase organique dans une solution aqueuse par mise en contact avec de l'eau de la phase organique ayant subi l'opération de lavage décrite ci-dessus.

On sépare enfin la phase organique de la phase aqueuse. La phase aqueuse obtenue contient le gallium pur sous forme de chlorure de gallium d'une pureté supérieure à 99,99%.

Les étapes d'extraction, de lavage sélectif et de récupération du gallium peuvent être mise en oeuvre dans les dispositifs classiques utilisés dans les procédés d'extraction liquide-liquide. De tels dispositifs comprennent généralement plusieurs étages de systèmes mélangeurs-décanteurs ou de colonnes garnies et/ou agitées, agencés pour réaliser les opérations d'extraction, de lavage sélectif et de récupération en phase aqueuse de l'élément extrait.

Les exemples qui vont suivre illustrent l'invention sans en limiter la portée.

## Exemple 1

On opère la purification de 126 litres d'une solution sulfurique de gallium issue du procédé de récupération du gallium des solutions d'aluminate de sodium du procédé Bayer selon le procédé décrit par la demanderesse dans la demande de brevet européen 0 002 970.

Cette solution a la composition et comporte les diverses impuretés aux concentrations suivantes:

| | |
|---|---|
| Ga: | 3,2 g/l |
| $H_2SO_4$: | 4 M |
| Al: | 4,1 g/l |
| Na: | 1,8 g/l |
| $Fe^{3+}$: | 350 mg/l |
| Ca: | 60 mg/l |
| Mg: | 30 mg/l |
| Cr: | 7 mg/l |
| V: | 280 mg/l |
| Cu: | 80 mg/l |
| Mn: | 3 mg/l |
| Zn: | 4 mg/l |
| Pb: | 2 mg/l |

On ajuste la concentration en ions chlorure de cette solution à la valeur 4,5 M en ajoutant 76 l d'acide chlorhydrique 12 M.

Puis on alimente en continu avec la solution obtenu à un débit de 1,2 l/h deux colonnes contenant chacune 2,25 litres de résine ammonium quaternaire vendue par la société Dia-Prosim sous la marque Duolite A 101 D.

Lorsque la première colonne est saturée en gallium, c'est-à-dire après avoir passé les 202 litres de la solution d'alimentation, elle est isolée et est lavée avec 10 l d'une solution d'acide chlorhydrique 6 M.

On procède ensuite à l'élution du gallium fixé sur la résine par 3,8 l d'eau à un débit de 1 l/h, et l'on obtient une solution de chlorure de gallium $GaCl_3$ dont la composition est la suivante:

| | |
|---|---|
| Ga: | 53 g/l |
| HCl: | 1,1 M |
| Al: | 3 mg/l |

| | |
|---|---|
| Na: | 25 mg/l |
| $Fe^{3+}$: | 650 mg/l |
| Ca: | 1,5 mg/l |
| Mg: | 1 mg/l |
| Cr: | 0,6 mg/l |
| V: | 0,2 mg/l |
| Cu: | 0,4 mg/l |
| Mn: | 0,4 mg/l |
| Zn: | 1,6 mg/l |
| Pb: | 0,1 mg/l |

On a ainsi réalisé une concentration et une première purification appréciable de la solution de gallium initiale. L'impureté la plus importante restante étant le fer à l'état ferrique ($Fe^{3+}$).

On ajuste la concentration en ions chlorure de la solution obtenue à une valeur de 5,4 M par addition de 2,5 litres d'acide chlorhydrique 12 M.

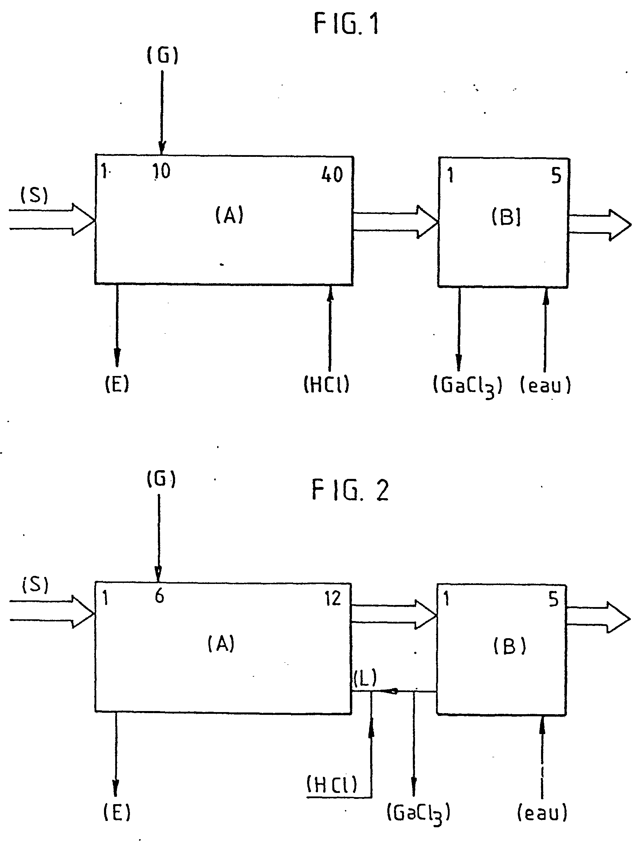

Puis on met en contact celle-ci avec une phase organique constituée de 2-ethylhexanol. Cette opération est réalisée selon le dispositif décrit à la figure 1 dans une batterie d'extraction liquide-liquide (A) fonctionnant à contre-courant et comprenant 40 étages théoriques. Le 2-éthylhexanol (S) alimente la batterie à l'étage 1 avec un débit de 510 ml/h. La solution de gallium (G) est introduite dans la batterie à l'étage 10 avec un débit de 300 ml/h.

Le lavage sélectif est réalisé par introduction à l'étage 40 d'une solution d'acide chlorhydrique (HCl)2M avec un débit de 90 ml/h.

La phase aqueuse épuisée (E) sortant de l'étage 1 contient toutes les impuretés et mains de 100 mg/l de gallium ce qui correspond à un taux d'extraction supérieur à 99,5%.

Le 2-éthylhexanol (S) chargé en gallium sortant de la batterie A alimente une batterie B de 5 étages dans laquelle on récupère le gallium en solution aqueuse par mise en contact à contre-courant de (S) avec de l'eau avec un débit de 320 ml/h. On obtient une solution de chlorure de gallium ($GaCl_3$) dont la composition est la suivante:

| | |
|---|---|
| Ga: | 30 $g/l^{-1}$ |
| Al | <0,2 mg/l |
| Na | <0,05 mg/l |
| Fe | <0,1 mg/l |
| Ca | <0,05 mg/l |
| Mg | <0,05 mg/l |
| Cr | <0,1 mg/l |
| V | <0,05 mg/l |
| Cu | <0,1 mg/l |
| Mn | <0,05 mg/l |
| Zn | <0,05 mg/l |
| Pb | <0,05 mg/l |

Le gallium dans la solution obtenue présente ainsi une pureté supérieure à 99,99%.

## Exemple 2

On utilise la solution de gallium obtenue selon l'exemple 1 après passage sur résine. Sa composition est:

| | |
|---|---|
| Ga: | 53 g/l |
| HCl: | 1,1 M |
| Al: | 3 mg/l |
| Na: | 25 mg/l |
| $Fe^{3+}$: | 650 mg/l |
| Ca: | 1,5 mg/l |
| Mg: | 1 mg/l |
| Cr: | 0,6 mg/l |
| V: | 0,2 mg/l |
| Cu: | 0,4 mg/l |
| Mn: | 0,4 mg/l |
| Zn: | 1,6 mg/l |
| Pb: | 0,1 mg/l |

On se réfère dans ce qui suit à la figure 2.

On ajuste la concentration en ion chlorure à 6M par addition de 3 litres d'HCl 12M, on obtient ainsi une solution de chlorure de gallium (G). Puis on met en contact celle-ci avec une phase organique (S) constituée de chlorure de tricaprylyl méthyl ammonium (vendue sous la marque Aliquat 336 sous forme chlorure) en solution à 6% dans le Solvesso 150 (marque déposée par la société Exxon).

Cette opération est réalisée dans une batterie d'extraction liquide-liquide (A) fonctionnant à contre courant et comportant 12 étages théoriques. La phase organique (S) alimente la batterie à l'étage 1 avec un débit de 2540 ml/h. La solution de gallium (G) est introduite dans la batterie à l'étage 6 avec un débit de 300 ml/h. Le lavage sélectif de la phase organique chargée est réalisé dans les étages 6 à 12 par une solution de lavage (L) décrite ci-après.

La phase organique sortant de A contenant le gallium purifié alimente alors la batterie B de 5 étages théoriques à l'étage 1 dans laquelle il est réextrait par de l'eau entrant à l'étage 5 avec un débit de 1270 ml/h sous forme d'une solution de chlorure de gallium à 14 g/l de Ga.

635 ml/h de cette solution sont prélevés et constituent la production tandis que 635 ml/h sont joints à 635 ml/h d'HCl 12M pour constituer la solution de lavage L qui alimente alors la batterie A à l'étage 12.

La solution épuisée E contient toutes les impuretés et moins de 50 mg/l de Ga, c'est-à-dire que l'on a extrait plus de 99% du gallium.

La solution de gallium purifié a la composition suivante:

| | |
|---|---|
| Ga: | 14 g/l |
| Al | <0,2 mg/l |
| Na | <0,05 mg/l |
| Fe | <0,1 mg/l |
| Ca | <0,05 mg/l |
| Mg | <0,05 mg/l |
| Cr | <0,1 mg/l |
| V | <0,05 mg/l |
| Cu | <0,1 mg/l |
| Mn | <0,05 mg/l |
| Zn | <0,05 mg/l |
| Pb | <0,05 mg/l |

ce qui correspond pour le gallium à une pureté supérieure à 99,99%.

## Revendications

1. Procédé de purification d'une solution aqueuse acide de gallium avec une résine échangeuse d'ions en vue d'obtenir une solution de chlorure de gallium de très haute pureté, caractérisé en ce que:

a) on ajuste, la concentration en ions chlorure de la solution aqueuse acide de gallium à une valeur comprise entre 3,5 et 8 M;
b) puis on met en contact la solution de chlorure de gallium avec une résine échangeuse d'ions du type base forte qui fixe le gallium; après lavage de la résine avec une solution d'acide chlorhydrique de concentration supérieure ou égale à 5 M, on élue le gallium de la résine avec de l'eau pour obtenir une solution aqueuse concentrée de chlorure de gallium;
c) on ajuste la concentration en ions chlorure de la solution obtenue à une valeur comprise entre 4 et 6 M;
d) on met en contact la solution aqueuse concentrée de gallium avec une phase organique contenant un agent d'extraction du gallium insoluble dans l'eau, choisi parmi les alcools de formule générale ROH dans laquelle R est un radical hydrocarboné aliphatique et/ou cycloaliphatique ayant de préférence un nombre d'atomes de carbone compris entre 4 et 10, ou parmi les sels d'ammonium quaternaires de formule

$$[R_3N-CH_3]^+, Cl^-$$

dans laquelle le radical hydrocarboné R a de 8 à 10 atomes de carbone, de façon à ce que le gallium soit extrait dans la phase organique; on sépare la phase organique de la phase aqueuse;
e) on réalise un lavage sélectif de cette phase organique qui élimine les impuretés restantes;
f) puis on opère le transfert du gallium purifié de la phase organique dans une solution aqueuse et enfin on sépare la phase organique de la phase aqueuse contenant le chlorure de gallium pur.

2. Procédé selon la revendication 1 caractérisé en ce que la concentration en ions chlorure de la solution de gallium selon a) est comprise entre 4,5 et 6 M.

3. Procédé selon la revendication 1 caractérisé en ce que la résine échangeuse d'ions comporte les motifs de formules:

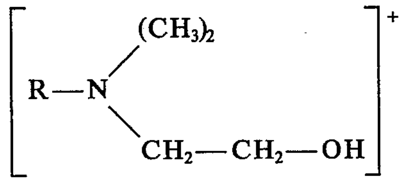

ou

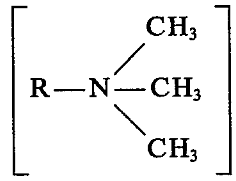

dans lesquelles R représente un copolymère styrène-divinylbenzène ou acrylique-divinylbenzène.

4. Procédé selon la revendication 1 caractérisé en ce que l'agent d'extraction est un alcool choisi parmi le groupe comportant: le pentanol, le n-butanol, l'isobutanol, le cyclohexanol, le n-hexanol 1, le 2-éthylhexanol, le n-heptanol, le n-octanol, l'isooctanol, le n-décanol, l'isodécanol.

5. Procédé selon la revendication 4 caractérisé en ce que l'agent d'extraction est le 2-éthylhexanol.

6. Procédé selon l'une des revendications 1 à 5 caractérisé en ce que le lavage sélectif de la phase organique est réalisé par mise en contact de celle-ci avec de l'eau ou une solution d'acide chlorhydrique dont la concentration est avantageusement inférieure à 6M lorsque l'agent d'extraction est un alcool.

7. Procédé selon la revendication 1 caractérisé en ce que le lavage sélectif de la phase organique est réalisé par mise en contact de celle-ci avec une solution de lavage présentant une acidité comprise entre 5 et 8M et contenant entre 1 et environ 50 g/l de gallium lorsque l'agent d'extraction est un sel d'ammonium quaternaire.

8. Procédé selon la revendication 7 caractérisé en ce que la solution de lavage présente une acidité comprise entre 5 et 8 M et contient entre 3 et 10 g/l de gallium.

9. Procédé selon la revendication 7 ou 8 caractérisé en ce que la solution de lavage est constituée d'un mélange d'une part, d'une solution d'acide chlorhydrique de concentration avantageusement comprise entre 7 et 12M et, d'autre part, d'une fraction de la solution aqueuse finale purifiée de chlorure de gallium.

## Patentansprüche

1. Verfahren zur Reinigung einer wäßrigen sauren Galliumlösung mit einem Ionenaustauscherharz zwecks Gewinnung einer Lösung von Galliumchlorid sehr hoher Reinheit, dadurch gekennzeichnet, daß man

a) die Konzentration der Chlorionen der wäßrigen sauren Galliumlösung auf einen Wert zwischen 3,5 und 8 M einstellt;
b) die Galliumchloridlösung dann mit einem Ionenaustauscherharz vom Typ einer starken Base in Berührung bringt, welches das Gallium bindet, nach Wäsche des Harzes mit einer Lösung von Chlorwasserstoffsäure einer Konzentration von 5 M oder mehr das Gallium des Harzes mit Wasser eluiert, um eine konzentrierte wäßrige Lösung von Galliumchlorid zu erhalten;
c) die Chlorionen-Konzentration der erhaltenen Lösung auf einen Wert zwischen 4 und 6 M einstellt;
d) die konzentrierte wäßrige Galliumlösung mit einer organischen Phase in Berührung bringt, die ein in Wasser unlösliches Extraktionsmittel für Gallium enthält, das unter Alkoholen der allgemeinen Formel ROH, in der R ein aliphatischer und/oder cycloaliphatischer Kohlenwasserstoffrest mit vorzugsweise 4 bis 10 Kohlenstoffatomen ist, oder unter den quaternären Ammoniumsalzen der Formel

$$[R_3N-CH_3]^+ Cl^-,$$

in der der Kohlenwasserstoffrest R 8 bis 10 Kohlenstoffatome besitzt, ausgewählt ist, um das Gallium in die organische Phase zu extrahieren, und die organische Phase von der wäßrigen Phase trennt;
e) diese organische Phase einer selektiven Wäsche zur Entfernung der verbleibenden Verunreinigungen unterwirft;
f) das gereinigte Gallium aus der organischen Phase in eine wäßrige Phase überführt und die organische Phase von der wäßrigen Phase trennt, die das reine Galliumchlorid enthält.

2. Verfahren nach Anspruch 1, dadurch gekennzeichnet, daß die Chlorionen-Konzentration der Galliumlösung bei a) 4,5 bis 6 M beträgt.

3. Verfahren nach Anspruch 1, dadurch gekennzeichnet, daß das Ionenaustauscherharz Struktureinheiten der Formeln

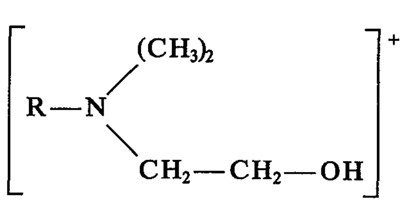

oder

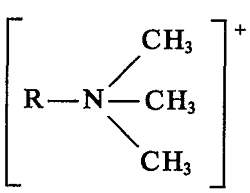

enthält, in denen R ein Styrol-Divinylbenzol- oder Acryl-Divinylbenzol-Copolymeres bedeutet.

4. Verfahren nach Anspruch 1, dadurch gekennzeichnet, daß das Extraktionsmittel ein aus der Gruppe von Pentanol, n-Butanol, Isobutanol, Cyclohexanol, n-Hexanol-1, 2-Äthylhexanol, n-Heptanol, n-Octanol, Isooctanol, n-Dodecanol oder Isododecanol ausgewählter Alkohol ist.

5. Verfahren nach Anspruch 4, dadurch gekennzeichnet, daß das Extraktionsmittel 2-Äthylhexanol ist.

6. Verfahren nach einem der Ansprüche 1 bis 5, dadurch gekennzeichnet, daß die selektive Wäsche der organischen Phase durch Inberührungbringen derselben mit Wasser oder einer wäßrigen Chlorwasserstofflösung erfolgt, deren Konzentration vorzugsweise geringer als 6 M ist, wenn das Extraktionsmittel ein Alkohol ist.

7. Verfahren nach Anspruch 1, dadurch gekennzeichnet, daß die selektive Wäsche der organischen Phase durch Inberührungbringen derselben mit einer Waschlösung durchgeführt wird, die eine Acidität zwischen 5 und 8 M besitzt und zwischen 1 und etwa 50 g/l Gallium enthält, wenn das Extraktionsmittel ein quaternäres Ammoniumsalz ist.

8. Verfahren nach Anspruch 7, dadurch gekennzeichnet, daß die Waschlösung eine Acidität zwischen 5 und 8 M besitzt und zwischen 3 und 10 g/l Gallium enthält.

9. Verfahren nach Anspruch 7 oder 8, dadurch gekennzeichnet, daß die Waschlösung aus einem Gemisch einer Lösung von Chlorwasserstoff einer Konzentration von vorzugsweise zwischen 7 und 12 M einerseits und einer Fraktion der endgültigen gereinigten wäßrigen Galliumchloridlösung andererseits besteht.

## Claims

1. Process for the purification of an acid aqueous solution of gallium with an ion exchange resin, in order to obtain a gallium chloride solution of very high purity, characterised in that:

a) the concentration of chloride ions in the acid aqueous solution of gallium is adjusted to a value of between 3.5 and 8 M;
b) the gallium chloride solution is then brought into contact with an ion exchange resin of the strong base type, which fixes the gallium; after the resin has been washed with a hydrochloric acid solution having a concentration greater than or equal to 5 M, the gallium is eluted from the resin with water to give a concentrated aqueous solution of gallium chloride;
c) the concentration of chloride ions in the solution obtained in adjusted to a value of between 4 and 6 M;
d) the concentrated aqueous solution of gallium is brought into contact with an organic

phase containing a water-insoluble gallium extraction agent chosen from amongst alcohols of the general formula ROH, in which R is an aliphatic and/or cycloaliphatic hydrocarbon radical preferably having between 4 and 10 carbon atoms, or from amongst quaternary ammonium salts of the formula

$[R_3N-CH_3]^+. Cl^-,$

in which the hydrocarbon radical R has from 8 to 10 carbon atoms, so that the gallium is extracted into the organic phase; the organic phase is separated from the aqueous phase;

e) this organic phase is subjected to selective washing, which removes the remaining impurities; and

f) the purified gallium is then transferred from the organic phase to an aqueous solution and, finally, the organic phase is separated from the aqueous phase containing the pure gallium chloride.

2. Process according to Claim 1, characterised in that the concentration of chloride ions in the solution of gallium under a) is between 4.5 and 6 M.

3. Process according to Claim 1, characterised in that the ion exchange resin contains the units of the formulae:

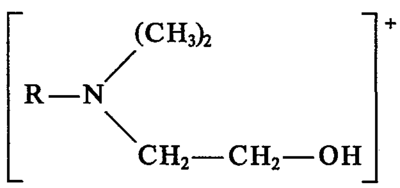

or

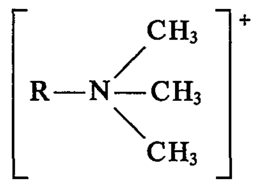

in which R represents a styrene-divinylbenzene or acrylic-divinylbenzene copolymer.

4. Process according to Claim 1, characterised in that the extraction agent is an alcohol chosen from amongst the group comprising: pentanol, n-butanol, isobutanol, cyclohexanol, n-hexan-1-ol, 2-ethylhexanol, n-heptanol, n-octanol, isooctanol, n-decanol and isodecanol.

5. Process according to Claim 4, characterised in that the extraction agent is 2-ethylhexanol.

6. Process according to one of Claims 1 to 5, characterised in that the selective washing of the organic phase is carried out by bringing the latter into contact with water or a hydrochloric acid solution whose concentration is advantageously less than 6 M if the extraction agent is an alcohol.

7. Process according to Claim 1, characterised in that the selective washing of the organic phase is carried out by bringing the latter into contact with a washing solution having an acidity of between 5 and 8 M and containing between 1 and about 50 g/litre of gallium if the extraction agent is a quaternary ammonium salt.

8. Process according to Claim 7, characterised in that the washing solution has an acidity of between 5 and 8 M and contains between 3 and 10 g/litre of gallium.

9. Process according to Claim 7 or 8, characterised in that the washing solution consists of a mixture of, on the one hand, a hydrochloric acid solution whose concentration is advantageously between 7 and 12 M, and, on the other hand, a portion of the final purified aqueous solution of gallium chloride.

FIG. 1

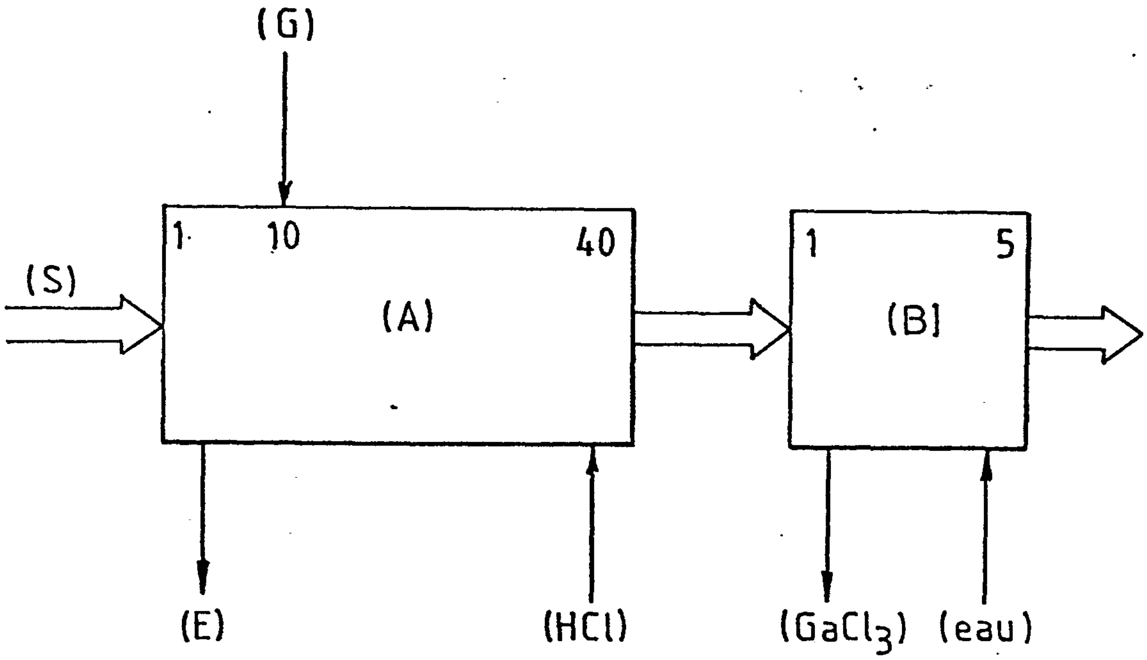


FIG. 2